Europäisches Patentamt

European Patent Office

Office européen des brevets

(19)

(11) Veröffentlichungsnummer : **0 062 155 B1**

(12) **EUROPÄISCHE PATENTSCHRIFT**

(45) Veröffentlichungstag der Patentschrift :
07.05.86

(21) Anmeldenummer : **82101330.7**

(22) Anmeldetag : **22.02.82**

(51) Int. Cl.⁴ : **F 16 B 13/00, E 04 F 19/00**

(54) **Verfahren zum Verankern von Verankerungsstangen od. dgl. in Beton.**

(30) Priorität : **28.03.81 DE 3112421**

(43) Veröffentlichungstag der Anmeldung :
**13.10.82 Patentblatt 82/41**

(45) Bekanntmachung des Hinweises auf die Patenterteilung : **07.05.86 Patentblatt 86/19**

(84) Benannte Vertragsstaaten :
**AT BE CH DE FR GB LI NL SE**

(56) Entgegenhaltungen :
**DE-A- 2 834 331**
**Dubbels Taschenbuch für den Maschinenbau, Band 1, 1955, S. 606**

(73) Patentinhaber : **B + B TEC Holding AG**
**Laupenstrasse**
**CH-3178 Bösingen (CH)**

(72) Erfinder : **Königer, Rudolf, Ing. grad.**
**Spitalackerstrasse 21**
**D-7808 Waldkirch (DE)**
Erfinder : **Königer, Kai**
**Spitalackerstrasse 21**
**D-7808 Waldkirch (DE)**

(74) Vertreter : **Dr.-Ing. Hans Lichti Dipl.-Ing. Heiner Lichti**
**Dipl.-Phys. Dr. Jost Lempert**
**Postfach 41 07 60 Durlacher Strasse 31**
**D-7500 Karlsruhe 41 (DE)**

## Beschreibung

Die Erfindung betrifft ein Verfahren zum Verankern von Verankerungsstangen od. dgl., insbesondere in Beton, wie Betondecken.

Es gibt verschiedene Verfahren zum Verankern von Verankerungsstangen in Beton, Fels od. dgl. für schwere Lasten, wie für Schienen für Fördergeräte, abgehängte Decken und Lüftungseinrichtungen in Tunnels etc. Wenn vorausgesehen werden kann, wo eine solche Verankerungs- oder Eisenstange in einer betonierten Fläche vorgesehen sein soll, so kann eine solche Eisenstange, die an ihrem Ende eine Querstange oder einen Haken aufweist, von vornherein mit einbetoniert werden. Allerdings ist oft nicht vorauszusehen, wo Befestigungsstangen vorhanden sein sollen. In diesem Fall wird dann in die ausgehärtete Betondecke oder -wand ein Verankerungsloch gebohrt und ein Dübel eingesetzt, in den dann eine Gewindestange eingeschraubt wird. Die wesentlichen Dübelarten sind : Kunststoffdübel, die auf dem Prinzip des Reibschlusses beruhen, sich spreizende Metalldübel mit Innen- und Außenkonus sowie Verbunddübel, bei denen der Halt durch Verklebung erreicht wird.

Bei Kunststoffdübeln ist zwar die Gewindestange demontierbar, diese Dübel weisen aber Nachteile im Hinblick auf die Stärke des Haltes bei Temperatureinflüssen, dynamischen und Schockbelastungen sowie bei auftretenden Rissen im Beton auf. Weiterhin kann durch Kunststoffdübel keine spannungsfreie Verbindung hergestellt werden. Das Verhalten von Metalldübeln bei Temperaturänderungen, Schockbelastungen und Rissen im Beton ist zwar etwas besser, wenn aber auch bei den letztgenannten Fällen ein relativ großer Schlupf auftritt. Ansonsten weisen Metalldübel die gleichen Nachteile wie Kunststoffdübel auf und sind darüber hinaus auch nicht demontierbar. Letzteres gilt auch für Verbunddübel, die zwar Bel astungen relativ gut widerstehen und auch eine spannungsfreie Verbindung gewährleisten, aber nachteilig im Hinblick auf größere Temperaturänderungen und Risse im Beton sind. Vollständig sichere und zuverlässige fachliche nachträgliche Befestigungsverfahren zur Befestigung von Metallstangen in Beton sind nicht bekannt. Solche sicheren Befestigungen sind aber unabdingbar. Man könnte daran denken, Bohrlöcher mit Hinterschneidungen vorzusehen. Bekannte Bohrverfahren sind dabei allerdings nicht einsetzbar. Es wären aufwendige Bohrwerkzeuge not wendig, die durch ein enges Bohrloch einführbar sein müßten und an der Stelle der anzubringenden Hinterschneidung in ihrem Radius oder zumindest teilweise radial vergrößerbar sein müßten. Ein solches Verfahren mag gerade noch anwendbar erscheinen, obwohl es äußerst aufwendig ist, wenn beim Bohren tatsächlich keine Armierungen getroffen werden. Dies ist aber nicht auszuschließen. Bei Armierungen werden aber die zum Ausbilden hinterschnittener Bohrlöcher notwendigen Werkzeuge mit Sicherheit zerstört.

In « Dubbel, Taschenbuch für den Maschinenbau », Band 1, 1955, Seite 606, Bild 55 mit zugehörigem Text, ist eine Kopfschraube als Dehnschraube zum Einschrauben in Elektronguß gezeigt, wobei das Gewinde in das die Schraube eingesetzt ist, in einem quer, also unter einem rechten Winkel zur Schraube eingelassenen Stahlzylinder sitzt. Wie der Stahlzylinder in das Elektrongußteil eingelassen wurde, ist der Druckschrift nicht zu entnehmen ; möglicherweise wurde er beim Gießen des Teils mit eingegossen, oder aber in eine beim Gießen freigelassene Öffnung eingesetzt. Beim Festlegen von Verankerungsstangen in Betondecken od. dgl. stellt sich aber das Problem, daß diese weit entfernt von jeder Kante einer solchen Betondecke festgelegt werden sollen bzw. Seitenflächen nicht zugänglich sind. Dabei können oft die Befestigungstellen nicht vorher festgelegt werden, so daß das Einlassen einer Stange od. dgl. oder das Freilassen einer Befestigungsöffnung nicht möglich ist.

Auf dem Gebiet der Beschlägeindustrie zum Befestigen von Kunststoffteilen wie Kleiderhaken, Handgriffen od. dgl. ist zur Vermeidung eines Herausschraubens und Stehlens dieser Teile gemäß der DE-OS-2 834 331 vorgeschlagen worden, in einer mittels eines herkömmlichen Dübels, wie Kunststoffdübel, in einer Wand zu befestigenden Schraube einen schrägen Durchbruch vorzusehen, durch den ein Nagel dann in die Wand eingeschlagen werden kann, um so eben ein Zurückdrehen der Schraube zu verhindern.

Der Erfindung liegt die Aufgabe zugrunde, das Verfahren der eingangs genannten Art derart weiterzubilden, daß Verankerungsstangen für schwere Lasten nachträglich in erstellten Betondecken oder aber im Fels an beliebiger Stelle verankert werden können, wobei die Verankerung einfach, zuverlässig und vollständig sicher sein soll, weiter soll die Erfindung ein Verankerungs- oder Befestigungselement sowie eine Vorrichtung vorschlagen, die dem Verfahren angepaßt sind und bie diesem eingesetzt werden können.

Erfindungsgemäß wird die genannte Aufgabe bei einem Verfahren der genannten Art dadurch gelöst, daß das Hilfsbohrloch unter einem spitzen Winkel α zum Verankerungsloch gesetzt wird. Es hat sich gezeigt, daß eine mittels des erfindungsgemäßen Verfahrens vorgenommene Verankerung allen Anforderungen an eine solche Verankerung genügt. Es ist ohne weiteres verständlich, daß die Verankerung durch Temperaturveränderung in keiner Weise beeinflußt wird. Es hat sich gezeigt, daß die Verankerung absolut widerstandsfähig gegen dynamische und Schockbelastungen ist. Durch die mittels des erfindungsgemäßen Verfahrens geschaffene Verankerung wird eine spannungsfreie Verbindung gewährleistet. Die Verankerung ist demontierbar. Bei Rissen im Beton tritt kein oder, wenn überhaupt, dann ein relativ kleinerer Schlupf auf, als dies bei bekannten Verankerungen der Fall ist.

Soweit es möglich ist, sollte erfindugnsgemäß vorgesehen sein, daß beide Bohrungen von der gleichen Seite des Betons her ausgeführt werden. In diesem Fall ist dann weiter in bevorzugter Weise vorgesehen, daß nach Vornahme der Verankerungsbohrung zum Setzen der Hilfsbohrung mittels der Verankerungsbohrung ein Hilfselement auf der Wand des Betons befestigt wird, das einen vorgegebenen Führungsdurchbruch zum Setzen der Hilfsbohrung aufweist und die Hilfsbohrung mittels dieses Hilfselements gesetzt wird oder daß beide Bohrungen mittels eines Hilfselements mit Führungsdurchbrüchen und darauf befestigten Bohrmaschinen gesetzt werden.

Gemäß den genannten bevorzugten Vorgehensweisen ergibt sich die Möglichkeit, beide Bohrungen derart präzise und einander zugeordnet zu setzen, daß die Achsen der Bohrungen sich schneiden und damit die Verankerung leicht und präzise vorgenommen werden kann. Zur Ermöglichung insbesondere eines solchen präzisen Vorgehens ist eine Vorrichtung zum Setzen von Bohrlöchern im Beton od. dgl., mit mindestens einer Bohrmaschine vorgesehen, wobei ein Hilfselement, beispielsweise eine Platte, mit mindestens einem Durchbruch vorgesehen, ist, dadurch gekennzeichnet, daß der Durchbruch unter einem spitzen Winkel zur Senkrechten zur Auflageseite der Platte verläuft und als geneigte Führungshülse für einen Bohrer ausgebildet ist und daß auf dem Hilfselement zumindest eine Bohrmaschine derart anbringbar ist, daß ihr Bohrer durch den geneigten Durchbruch führbar ist. Die Vorrichtung kann dabei weiter derart bevorzugt ausgebildet sein, daß an dem Hilfselement eine zweite Bohrmaschine derart anbringbar ist, daß sie sich senkrecht zur Auflagefläche erstreckt oder aber daß in einem Führungsloch des Hilfselements eine Schraube einsetzbar und in einer Betonwand derart verspannbar ist, daß das Hilfsteil um die Schraube verschwenkbar ist.

Im erstgenannten Fall sind also zwei Bohrmaschinen mit einer Platte verbunden und die Bohrlöcher werden in beliebiger Reihenfolge nacheinander gesetzt. Im zweiten Falle wird zunächst an sich ohne Zuhilfenahme der Platte mittels einer herkömmlichen Bohrmaschine das senkrecht zur Oberfläche des Betons verlaufende Verankerungsloch gesetzt und anschließend die Platte mittels Spannschraube od. dgl. im Verankerungsloch festgespannt und danach mittels der an der Platte befestigten Bohrmaschine die Hilfsbohrung gesetzt. Der Durchbruch in der Platte, der dann die Verankerungsschraube trifft und der Führungsdurchbruch der Platte für den Bohrer der Bohrmaschine für die Hilfsbohrung sind dabei so ausgerichtet, daß die Hilfsbohrung die Verankerungsbohrung zentral trifft.

Die zuletzt beschriebene Ausgestaltung weist den Vorteil auf, daß die Platte um die Verankerungsbohrung um 360° verschwenkbar ist und daher, wenn bei dem ersten Bohren der Hilfsbohrung der Bohrer auf eine Armierung trifft, die Platte leicht etwas verdreht werden kann, so daß die Armierungen nicht durchbohrt werden müssen. Grundsätzlich können die Platten der Vorrichtungen angesaugt, gedübelt oder versprießt werden, um am Beton fest anzuliegen.

Eine weitere Ausführungsform bei dem Vorhandensein von zwei Bohrmaschienen an einer Platte zeichnet sich dadurch aus, daß der Bohrer zweite der Bohrmaschine ebenfalls durch einen Führungsdurchbruch des Hilfselements geführt ist, wobei die Durchbrüche als Führungshülsen für beide Bohrer derart ausgerichtet sind, daß die Bohrungen sich zentral treffen. Um seitliche Kräfte beim Bohren zuverlässig aufzunehmen und damit tatsächlich eine gewollte Führung der Bohrer optimal zu gewährleisten, ist gemäß weiterer Ausgestaltung vorgesehen, daß die Bohrmaschine mittels einer Befestigungsvorrichtung mit zwei Stützen gehalten wird, wobei die Stützen mit der Bohr maschine bzw. dem Bohrer fluchten. Wenn auch grundsätzlich die bohrung, beispielsweise bei Kanten oder im Endbereich von Betonflächen senkrecht zur Verankerungsbohrung vorgenommen werden kann, so ist doch gemäß der Erfindung vorgesehen, daß die Hilfsbohrungen unter einem spitzen Winkel vorzugsweise von mehr als 45° zur Verankerungsbohrung gesetzt werden. Beide Bohrungen werden von der gleichen Fläche aus vorgenommen. Durch die Vornahme eines relativ wenig spitzen Winkels zwischen den Bohrungen wird bei auftretenden Rissen der Schlupf minimiert. Wenn auch vorgesehen sein kann, daß ein an sich bekannter Dübel mit schwenkbaren Haltearmen, wie ein Kipp- oder Spreizdübel, vorzugsweise aus Metall, soweit in die Verankerungsbohrung eingeschoben wird, bis die Halterungsarme in die Hilfsbohrung eingreifen oder auch zwischen einer Verankerungsstange und dem Verankerungselement ein Bajonettverschluß vorgesehen ist bzw. die Verankerungsstange einen Haken oder Riegel aufweist, so ist es doch äußerst vorteilhaft, derart vorzugehen, daß als Verankerungselement ein im wesentlichen zylindrisches Teil mit einem sich unter dem Schnittwinkel von Verankerungs- und Hilfsbohrung zur Längsachse des Teils erstreckenden Querdurchbruch mit Innengewinde in die Hilfsbohrung soweit eingeführt wird, daß das Innengewinde im wesentlichen mit der Verankerungsbohrung fluchtet und daß anschließend die mit einem Gewinde versehene Verankerungsstange eingeschraubt wird. Das zylindrische Teil kann ein Massivteil mit geeignet vorgesehenen Bohrungen, wie auch Gewindebohrungen oder eine Hülse sein. Insbesondere im letzten Fall kann vorgesehen sein, daß in dem Querdurchbruch eine Querhülse mit einem Innengewinde befestigt ist. Bei dem erfindungsgemäßen Verfahren wird das Bohren mittels Diamantbohrern vorgenommen, da hierdurch eine sehr hohe Präzision erreicht werden kann, die notwendig ist, damit die zweite vorgenommene Bohrung die erste vorgenommene Bohrung auch tatsächlich so trifft, daß die beiden Längsachsen der Bohrung sich schneiden. Ein speziell im Hinblick auf das erfindungsgemäße Verfahren entwickeltes Verankerungselement ist ein im wesentlichen zylindrisches Teil mit einem Querdurchbruch und einem Innengewinde im Querdurchbruch, dadurch gekennzeichnet, daß die Richtung des Querdurchbruchs zur Längsachse des Teils eine spitzen Winkel α einschließet.

Gemäß einer bevorzugten Ausgestaltung des erfindungsgemäß Verfahrens ist vorgesehen, daß nach Einschrauben der Verankerungsstange diese von der Hilfsbohrung aus im dem zylindrischen Teil fixiert wird. Dies kann beispielsweise dadurch erfolgen, daß die Verankerungsstange im zylindrischen Teil festgeklebt wird. In bevorzugter Ausgestaltung ist aber vorgesehen, daß das Gewinde der Verankerungsstange durch einen von der einen Stirnseite des im wesentlichen zylindrischen Teils bis zum Querdurchbruch mit Innengewinde sich erstreckenden Axialdurchbruchs des zylindrischen Teils mit einer Körnung versehen wird. In diesem Falle wird durch den Axialdurchbruch eine zugespitzte Körnungsstange bis zum Gewinde der Verankerungsstange eingesteckt. Das andere Ende der Körnungsstange ragt aus der Hilfsbohrung heraus. Auf diesem Ende werden einige Hammerschläge angebracht, die die Körnung am Gewinde der Verankerungsstange bewirken. Das Gewinde wird dadurch deformiert und die Verankerungsstange kann nicht mehr herausgeschraubt werden. Gemäß einer bevorzugten Ausgestaltung des erfindungsgemäßen Verankerungselementes ist vorgesehen, daß das im wesentlichen zylindrische Teil zumindest an einem Stirnende — nämlich dem am Einsatz des zylindrischen Teils nach außen gerichteten Stirnende — eine Mehrkantausnehmung oder einen Mehrkantansatz zum Angreifen eines Hilfswerkzeugs aufweist. Diese Ausnehmung bzw. der Ansatz sind in bevorzugter Weise asymmetrisch ausgebildet, wobei insbesondere vorgesehen ist, daß die Mehrkantausnehmung bzw. der Mehrkantansatz derart ausgestaltet ist, daß ein mit entsprechendem Mehrkantansatz bzw. entsprechender Ausnehmung versehenes Hilfswerkzeug nur in einer bestimmten Winkelstellung ansetzbar ist. Ist dann an einem nach außen ragenden Abschnitt des Hilfswerkzeugs eine Kennung vorgesehen, so kann das zylindrische Teil nach dem Einsetzen mittels des Hilfswerkzeugs winkelmäßig problemlos so ausgerichtet werden, daß der Gewindequerdurchbruch mit der Verankerungsbohrung fluchtet und damit die Verankerungsstange problemlos eingeschraubt werden kann. Um auch ohne weiteres eine Einstecktiefe des zylindrischen Teils mittels des Hilfswerkzeugs zu erhalten, die derart ist, daß das zylindrische Teil nicht zu wenig oder zu weit in die Hilfsbohrung eingesteckt ist, sondern gerade soweit, daß der Gewindurchbruch mit der Verankerungsbohrung fluchtet, kann unter einem geeigneten Winkel am äußeren Teil des Hilfswerkzeugs eine Anlageplatte vorgesehen sein. Das Hilfswerkzeug wird dann so weit eingesteckt, bis die Anlageplatte flach an der mit den Bohrungen versehenen Betonwand anliegt. Eine entsprechende Ausrichtung des zylindrischen Verankerungsteils kann bei einem Schraubgewinde am Stirnende des Verankerungsteils auch dadurch erreicht werden, daß das Schraubgewinde eine exakt vorgegebene Gangzahl aufweist, mit in Bezug auf die dem Stirnende näher gelegene Öffnung des Querdurchbruchs definiertem Gewindebeginn. Es ist noch zu erwähnen, daß die Verankerungsstange grundsätzlich als Gewindestange mit durchgehendem Gewinde ausgeführt werden kann. Sie kann aber auch lediglich an ihrem inneren und ggfls. äußeren Teil mit einem Gewinde versehen sein, während ihr Zwischenabschnitt gewindelos ist.

Weitere Vorteile und Merkmale der Erfindung ergeben sich aus den Ansprüchen und aus der nachfolgenden Beschreibung, in der die Erfindung beispielshaft anhand der Zeichnung im einzelnen erläutert ist. Dabei zeigt bzw. zeigen:

Figur 1 einzelne Stufen einer Ausführungsform des erfindungsgemäßen Verfahrens;

Figur 2 die Stufe nach Figur 1d in vergrößerter Darstellung zur Erläuterung des Verankerungselements nach der Erfindung;

Figur 3 eine Aufsicht auf vier gesetzte Befestigungsstellen zur Anbringung einer Schiene;

Figur 4 einen Schnitt entlang der Linie IV-IV der Figur 3 nach Anbringung der Schiene;

Figur 5 eine Ausführungsform für große Belastungen;

Figur 6 eine weitere Darstellung ähnlich der Darstellung der Figur 1f, wobei die Verankerungsstange mittels einer Querkräfte aufnehmenden Hülse zentriert wird;

Figuren 7 und 8 alternative Verankerungsmöglichkeiten der Verankerungsstange im Verankerungselement durch Haken und Riegel in Seitenansicht bzw. in Aufsicht in Richtung der Pfeile VIIb bzw. VIIIb;

Figur 9 in schematischer Darstellung eine Vorrichtung zum Setzen der Verankerungsbohrungen; und

Figur 10 in schematischer Darstellung eine andere Ausgestaltung der Vorrichtung zum Setzen der Verankerungsbohrungen.

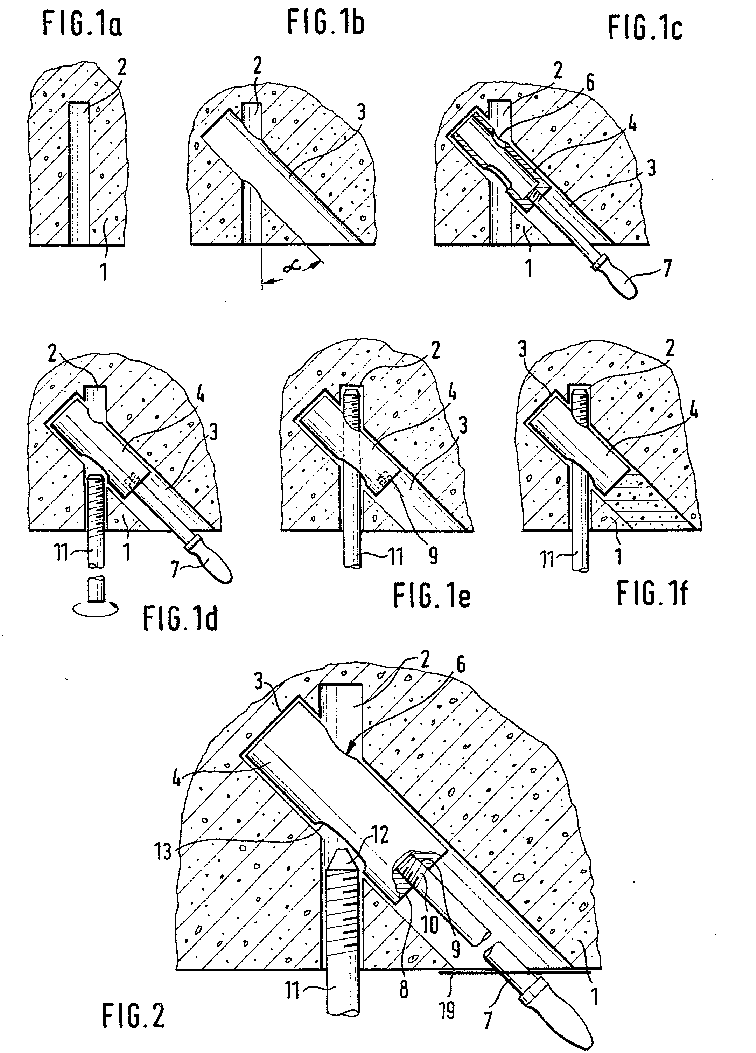

In beispielsweise einer Betondecke 1, in der eine Einsenstage od. dgl. zu befestigen ist, wird zunächst ein Verankerungsloch 2 gebohrt, das im Ausführungsbeispiel der Figur 1, sich wie üblich senkrecht von der Deckenfläche in die Betondecke 1 hinein erstreckt. Anschließend wird versetzt zum Verankerungsloch 2 und unter einem Winkel α, der kleiner als 90° ist, ein Hilfsbohrloch 3 gebohrt, das das Verankerungsloch 2 schneidet. Aus Präzisionsgründen werden diese Löcher im allgemeinen nicht mittels Hammerbohren, sondern mittels Diamantbohren vorgenommen.

In einem nächsten Verfahrensabschnitt (Fig. 1c) wird in das Hilfsbohrloch 3 ein Verankerungselement 4 eingebracht.

Das Verankerungselement 4 ist in Figur 2 noch einmal deutlicher dargestellt. Das Verankerungselement 4 ist in dem dargestellten Ausführungsbeispiel als Hülse ausgebildet, vorzugsweise als zylindrische Hülse, deren Zylindermantel einen Durchbruch aufweist. Das Verankerungselement kann je nach Erfordernissen auch als Massivteil ausgebildet sein.

Das Verankerungselement oder die Verankerungshülse 4 wird von außen mittels eines Hilfswerkzeugs 7 in Form eines Halters soweit in die Hilfsbohrung derart eingeschoben, daß der Durchbruch mit der Verankerungsbohrung 2 fluchtet. Dabei wird die Hülse 4 durch das Hilfswerkzeug 7 dadurch gehalten, daß in einer Stirnseite 8 der Hülse 4 eine Bohrung 9 mit einem Inengewinde ausgebildet ist, in das in Gewindeende 10 des Hilfswerkzeugs 7 eingeschraubt ist. Das Innen- oder Schraubgewinde der Verankerungshülse 4 weist eine exakt vorgegebene Gangzahl von beispielsweise 2 1/2 auf. Ebenfalls ist der Beginn des Gewindes relativ zu der dem Stirnende 8 nähergelegenen Öffnung des Querdurchbruchs genau festgelegt, so daß das Hilfswerkzeug 7 nach vollständigem Einschrauben immer eine gleiche Relativstellung zum Gewindedurchbruch einnimmt. Ist weiterhin, wie in Fig. 2 dargestellt, unter einem Winkel, der demjenigen des Hilfsbohrlochs zum Verankerungsloch entspricht, und im geeigneten, vorbestimmten Abstand von Ende des Hilfswerkzeugs 7 an diesem eine Anlageplatte 19 befestigt, so kann mittels des Hilfswerkzeugs 7 die Verankerungshülse 4 immer in die richtige Tiefe derart in das Hilfsbohrloch 3 eingebracht werden, daß der Querdurchbruch mit dem Verankerungsloch 2 fluchtet und die im Ausführungsbeispiel als Gewindestange ausgebildete Verankerungsstange problemlos eingeschraubt werden kann. Statt dessen könnte beispielsweise in der Stirnfläche 8 der Verankerungshülse 4 auch eine Sechskantausnehmung oder aber auch ein Sechskantansatz vorgesehen sein, woran ein entsprechendes Gegenstück des Hilfswerkzeugs 7 angreift. Statt einer symmetrischen Sechskantausnehmung oder eines symmetrischen Sechskantanzatzes können auch Ausnehmungen oder Ansätze vorgesehen sein, die asymmetrisch sind und insbesondere so ausgerichtet sind, daß das Hilfswerkzeug 7 nur unter einer ganz bestimmten Winkelstellung mit der Verankerungshülse 4 verbunden werden kann. Auch hierdurch wird erreicht, daß bei entsprechender Ausgestaltung des Hilfswerkzeugs 7 die Verankerungshülse 4 problemlos genau so weit in die Hilfsbohrung und unter einem solchen Winkel eingesteckt wird, daß der Querdurchbruch der Verankerungshülse 4 mit Verankerungsloch 2 fluchtet.

Nach Einstecken der Verankerungshülse 4 durch die Hilfsbohrung 3 bis zum Fluchten des Durchbruchs mit Gewinde 6 mit dem Verankerungsloch 2 wird in diese die Gewindestange 11 eingesetzt und eingeschraubt.

Damit die Gewindestange 11 sich gut in den Durchbruch der Verankerungshülse 4 einstecken und dann verschrauben läßt, weist die Gewindestange 11 an ihrem vorderen Ende eine Spitze 12 auf. Darüberhinaus ist zumindest eine Öffnung 13 des Durchbruchs der Verankerungshülse 4 erweitert, so daß, selbst dann, wenn die Hülse 4 nicht mit ihrem Durchbruch etwas fluchtend zur Verankerungsbohrung 2 gehalten wird, beim Einstecken der Gewindestange 11 eine Zentrierung von Verankerungshülse 4 und Gewindestange 11 bewirkt wird.

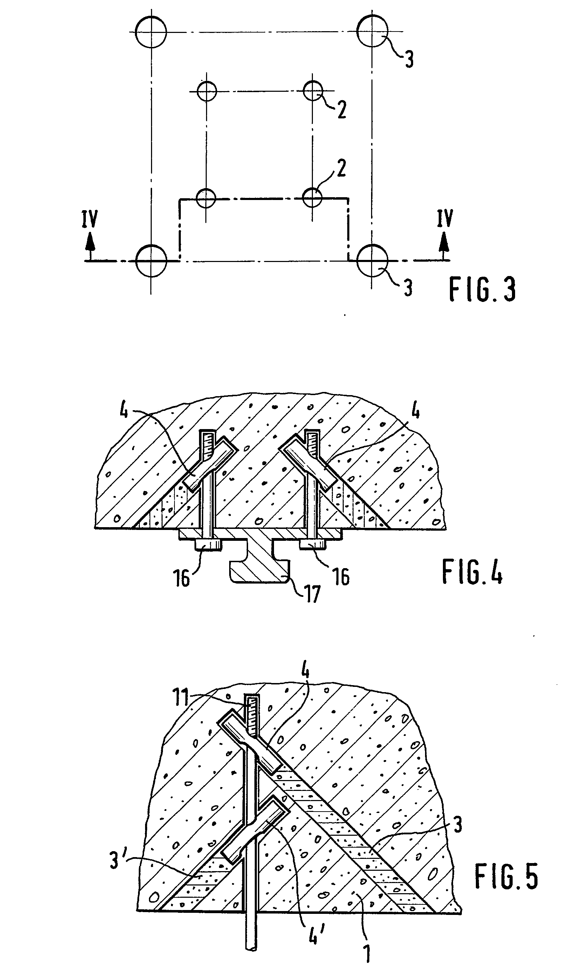

Die Gewindestange 11, die beispielsweise eine Schraube mit einem Schraubenkopf 16 (vgl. Figur 4) sein kann, wird soweit wie erforderlich eingeschraubt, oder aber soweit, bis sie ein durch sie gehaltenes Teil (beispielsweise in Figur 4 eine Schiene 17) an der Betondecke 1 festlegt. Anschließend wird das Hilfswerkzeug 7 von der Verankerungshülse 4 gelöst, also beispielsweise das Hilfswerkzeug 7 der Figur 2 mit seinem Gewindeende 10 aus der Gewindebohrung 9 herausgedreht. Das Lösen des Hilfswerkzeugs 7 kann selbstverständlich auch schon dann geschehen, wenn die Gewindestange 11 nur ein wenig in den Durchbruch hineingesteckt oder hineingeschraubt ist, da die Verankerungshülse 4 dann hierdurch gehalten wird und nicht mehr herausfallen kann.

Die erfindungsgemäß vorgesehene Verankerung in der dargestellten Ausgestaltung benutzt also zwei Verankerungsteile, nämlich die Gewindestange 11, an deren aus dem Verankerungsloch 2 herausragenden Ende die zu haltende Last angebracht wird, und die verankerungshülse als eigentliches Verankerungselement, das in der Hilfsbohrung 3 gehalten wird und ein Herausziehen der Gewindestange 11 verhindert. Während des Verbindens von den beiden Verankerugsteilen wird die Hülse 4 mittels eines Hilfswerkzeugs in Form des Halters 7 ausgerichtet und gehalten.

Nachdem die Gewindestange 11 in die Hülse 4 eingeschraubt wurde, kann sie durch das Hilfsbohrloch 3 und die Gewindebohrung 9 in der Stirnfläche 8 der Verankerungshülse 4 noch befestigt werden, beispielsweise indem von außen her Klebstoff eingedrückt wird, so daß die Gewindestange 11 mit der Verankerungshülse 4 verklebt wird. Es kann auch von außen her ein Körnungsstab durch die Bohrung 9 eingesteckt werden, bis er am Gewinde der Gewindestange 11 anliegt. Das nach außen ragende Ende eines solchen Körnungsstabes wird dann mit einigen Hammerschlägen versehen, wodurch das Gewinde der Gewindestange 11 deformiert wird, so daß diese aus der Hülse 4 nicht mehr herausgeschraubt werden kann. Die Gewindestange 11 kann weiterhin gegen Herausschrauben aus der Hülse 4 dadurch festgelegt werden, daß in der Gewindebohrung 9 eine Schraube soweit eingeschraubt wird, bis sie mit ihrem inneren Ende an dem Gewinde der Gewindestange 11 angreift und diese hierdurch fixiert.

Zum Schluß kann, wie dies in Figur 1f dargestellt ist, die Hilfsbohrung 2 wieder verfüllt, beispielsweise zubetoniert werden.

Wenn auch die beschriebene Verfahrensweise unter Verwendung eines erfindungsgemäßen Verankerungselements in Form einer Verankerungshülse 4 die vorteilhafteste ist, so könnten bei dem erfindungsgemäßen verfahren auch Verankerungselemente in Form von Dübeln zum Durchstecken, wie beispielsweise Kippdübel oder Spreizdübel, insbesondere Metallspreizdübel, eingesetzt werden.

In den Figuren 3 und 4 ist als Anwendungsbeispiel die Befestigung einer Schiene, beispielsweise zum Verschieben eines Krans od. dgl. dargestellt. Zunächst wird ein Verankerungsloch 2 und anschließend das zugehörige Hilfsbohrloch 3 gefohrt. Dies erfolgt vorzugsweise mit einem Bohrständer, der mit seiner Grundplatte in einer Position festgelegt ist. Nach dem Bohren des Verankerungsloches 2 wird ein das Bohrwerkzeug tragender Arm so verschoben oder verschwenkt und anschließend geneigt oder gekippt, daß das zugehörige schräge Hilfsbohrloch gebohrt werden kann. In dieser Weise werden alle Befestigungspunkte der Figur 3 erstellt. Eine Schiene 17 wird dann mittels in die Verankerungshülsen 4 eingeschraubter Schrauben gehalten (vgl. Figur 4).

In Figur 5 ist eine bevorzugte Ausgestaltung der Befestigung einer Gewindestange 11 nach dem erfindungsgemäßen Verfahren dargestellt. Hierbei sind für ein Verankerungsloch 2 zwei Hilfsbohrlöcher 3, 3' gesetzt worden, die das Verankerungsloch in Abstand zueinander schneiden. In jeder der Hilfsbohrlöcher 3, 3' ist jeweils eine Verankerungshülse 4 bzw. 4' vorgesehen, durch die die Gewindestange hindurchgeschraubt und durch die Gewindestange 11 gehalten wird. Hierdurch wird also eine weitere Verankerung der Gewindestange 11 erreicht.

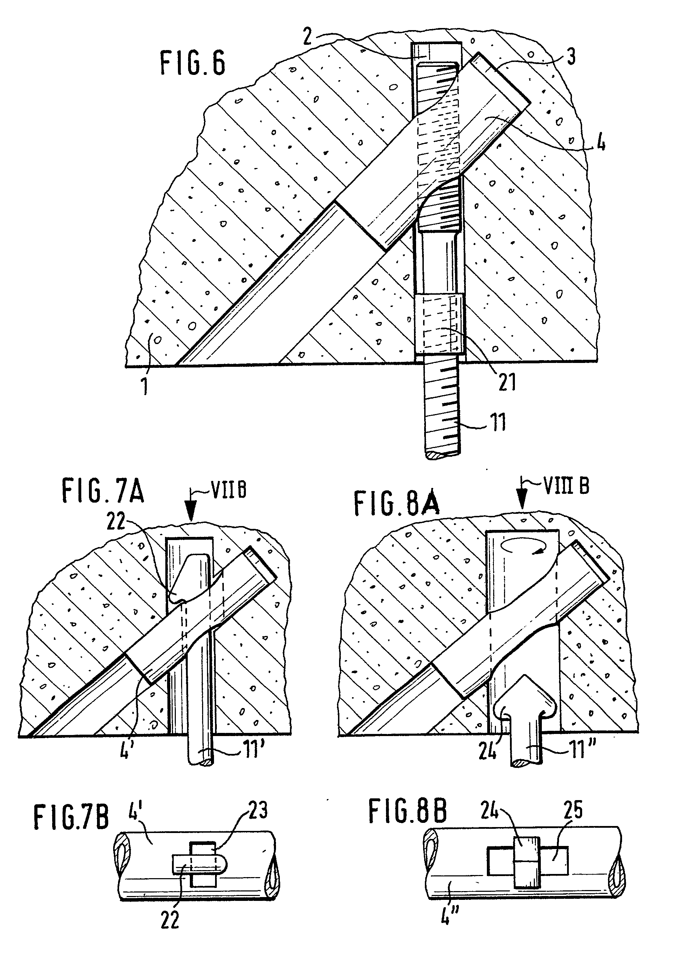

In Figur 6 ist eine verbesserte Zentrierung der Gewindestange 11 dargestellt, die ggfls. im Zusammenhang mit einem der Schritte 1d bis 1e bzw. nach diesen Schritten erfolgt. Es kann erforderlich sein, zum Einführen der Gewindestange 11 zwischen dieser und den Wänden des Verankerungslochs 2 ein gewisses Spiel vorzusehen. Ein solches Spiel ist aber nachteilig bei der Belastung der Verankerungsstange, wenn beispielsweise auf diese keine axialen, sondern Scherkräfte ausgeübt werden. Zur Vermeidung dieses nachteiligen Spiels its entsprechend der Ausführungsform nach Figur 6 vorgesehen, daß vorzugsweise nach Einschieben der Verankerungsstange in die Bohrung und vor dem Einschrauben der Gewindestange 11 in die Verankerungshülse 4 auf der Gewindestange 11 axial eine Metallhülse 21 zumindest so weit in die Bohrung eingeschoben wird, daß die Hülse 21 die vordere Abschlußwand des Betons 1 nicht überragt. Hierdurch wird das Spiel zwischen Wand des Bohrlochs 2 und Außenumfang des Gewindestange 11 erheblich reduziert.

Bisher wurden Verankerungen mittels Verschraubung der als Gewindestange ausgebildeten Verankerungsstange 11 in der Verankerungshülse 3 dargestellt. Obwohl es sich hierbei um die äußerst bevorzugte Ausgestaltung der Erfindung handelt, können grundsätzlich auch andere Verbindungsmöglichkeiten zwischen Verankerungshülse und Verankerungsstange vorgesehen sein, wie beispielsweise ein Bajonettverschluß oder das Vorsehen von Haken oder Riegeln und ähnlichen Arretierelementen an der Verankerungsstange, die einen Durchbruch in der Verankerungshülse hintergreifen. In der Figur 7 ist einem mit einem Haken 22 versehene Verankerungsstange 11' dargestellt. Ein Durchbruch 23 der Verankerungshülse 4' ist derart, daß er senkrecht zur Erstreckungsrichtung der Verankerungshülse 4' größere Abmessungen aufweist, als in Richtung der Erstreckung der Verankerungshülse 4'. Die Verankerugsstange 11' wird dann mit ihrem Haken 22 so in die Verankerungshülse 4' und durch deren Durchbruch 23 hindurchgeführt, daß der Verankerungshaken senk recht zur Erstreckungsrichtung der Verankerungshülse 4' ausgerichtet ist. Nachdem der Haken 22 vollständig durch die Hülse 4' hindurchgetreten ist, wird die Verankerungsstange um 90° gedreht, so daß der Haken 22 die Wand der Durchbruchs 23 der Hülse 4' derart hintergreift, wie dies in der Figur 7 dargestellt ist.

Alternativ hierzu kann die Verankerungsstange 11" der Figur 8 einen Riegel oder beidseitigen Haken 24 aufweisen. In diesem Falle ist vorzugsweise ein Durchbruch 25 in der Verankerungshülse 4" vorgesehen, der sich parallel zur Erstreckungsrichtung der Verankerungshülse 4" erstreckt. Die Verankerungsstange 11" mit ihrem Riegel 24 wird dann in der in Figur 8 gezeigten Weise in die Hülse 4" und durch deren Durchbruch 25 hindurchgeführt und anschließend ebenfalls um 90° verdreht, so daß der Riegel 24 sich senkrecht zur Erstreckungsrichtung des Durchbruchs 25 und der Hülse 4" erstreckt und damit auf den Begrenzungswänden des Durchbruchs 25 aufliegt. Auch so kann eine zuverlässige Festlegung der Verankerungsstange erreicht werden, wobei bei beiden Ausführungsformen, also sowohl der Ausführungsform der Figur 7 als auch der der Figur 8, die Verankerungsstange zusätzlich durch eine Gegenmutter auf der Vorderseite der Betonward festgespannt wird.

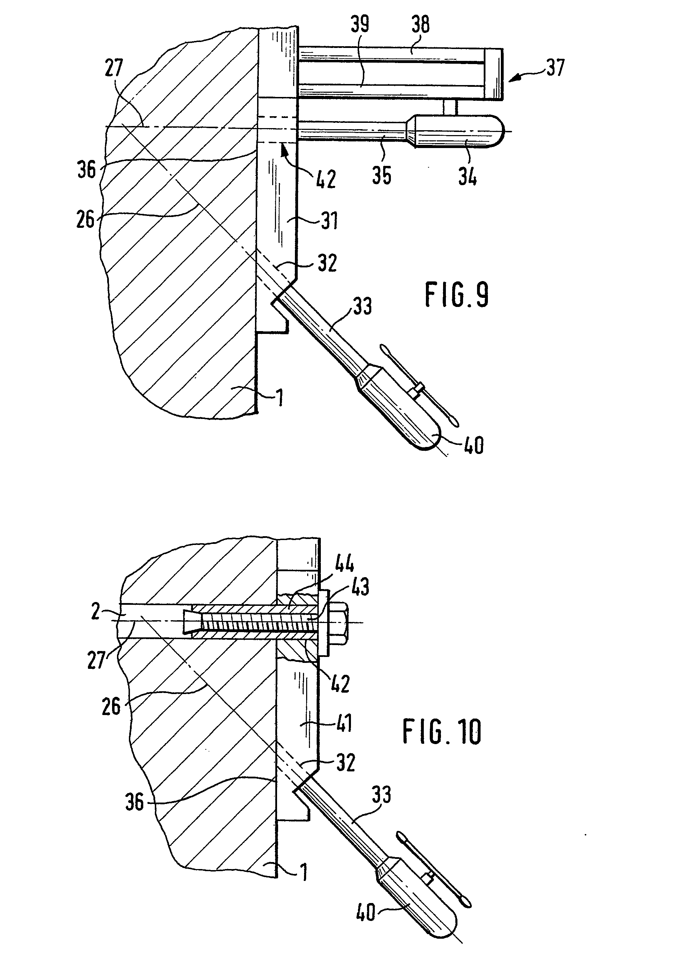

Beim Setzen des Verankerugsloches 2 und des Hilfsbohrlochs 3 kommt es wesentlich auf eine genaue Zentrierung der beiden Bohrungen derart an, daß die Achse 26 der Hilfsbohrung die Achse 27 der Verankerungsbohrung 2 möglichst schneidet. Um dies zuverlässig zu gewährleisten, sind Vorichtungen nach den Figuren 9 und 10 vorgesehen.

Wesentliches Teil der Vorrichtung zum Setzen von Bohrlöchern in Beton ist ein Hilfselement in Form einer Platte 31, die einerseits entsprechend dem vorgenommenen oder vorzunehmenden Verankerungsloch zentrierbar ist und andererseits einen Durchbruch 32 aufweist, der als Führungshülse für einen Bohrer 33 dient und diesen derart führt, daß das vom Bohrer 33 bewirkte Hilfsbohrloch das Verankerungsloch mit der Achse 27 schneidet. In der Fig. 9 ist auf der Platte 31 eine Bohrmaschine 34 mit einem Bohrer 35 derart angebracht, daß der Bohrer 35 und damit die Achse 27 des zu setzenden Verankerungslochs senkrecht zur Anlageoberfläche 36 der Platte 31 ausgerichtet ist. Die Bohrmaschine 34 ist mittels eines Befestigungsgestells 37 an der Platte 31 befestigt. Das Befestigungsgestell 37 kann ebenso wie die Bohrmaschine 34 grundsätzlich in herkömmlicher Weise ausgebildet sein und beispielsweise ein Befestigungsstange als Ständer aufweisen. Zur Vermeidung seitlicher Bewegungen weist das in der Figur 9 skizzierte Befestigungsgestell 37 aber zwei Säulen 38, 39 auf, die fluchtend zum Bohrer 35 angeordnet sind, so daß sie in idealer Weise beim Bohren auf sie ausgeübte Kräfte aufnehmen können. Die Anordnung zweier Säulen 38, 39 bei der Befestigungsvorrichtung 37 für die Bohrmaschine 34 weist eine höhere Stabilität als lediglich eine Säule auf.

Der Bohrer 33 ist Teil einer Bohrmaschine 40, die in gleicher oder ähnlicher Weise wie die Bohrmaschine 34 an der Befestigungsplatte 31 angebracht sein kann, so daß zur besseren Übersicht die Befestigung dieser Bohrmaschine 40 in den Figuren 9 und 10 nicht weiter im einzelnen dargestellt ist. Die Platte 31 kann an der Betonwand 1 mittels Vakuum angesaugt, angedübelt oder verspreißt werden. Die Vorrichtung zum Setzen der Bohrlöcher, wie sie in Figur 9 dargestellt ist, gewährleistet zuverlässig, daß die zu setzende Verankerungsbohrung und die zu setzende Hilfsbohrung sich mit ihren Achsen 26, 27 schneiden und daher eine stabile Verankerung vorgenommen werden kann.

Bei einer Vorrichtung zum Setzen von Bohrlöchern nach der Ausführungsform der Figur 9 kann es passieren, daß die eine oder andere zu setzende Bohrung auf eine Armierung trifft. Um hier größere Freiheiten zu ermöglichen und gleichzeitig die genaue Zentrierung von Hilfsbohrloch und Verankerungsloch dennoch zu gewährleisten, weist die in der Figur 10 dargestellte Ausführungsform einer Vorrichtung zum Setzen von Bohrlöchern 41 lediglich eine Bohrmaschine 40 mit Boher 33 auf, der wiederum durch eine Durchbruch als Führungshülse 32 geführt wird. Die Bohrmaschine 40 kann dabei in der unter Bezugnahme auf die Figur 9 dargestellten Weise an der Platte 41 befestigt sein. Statt der Bohrmaschine 34 weist die Platte weiterhin lediglich eine Durchbruch 42 auf, der sich senkrecht zur am Beton 1 liegenden Oberfläche 36 der Platte erstreckt. Durch diesen Durchbruch 42 wird eine Schraube 43 mit einer Spannhülse 44 hindurchgesteckt, mittels derer die Platte 41 in einem schon vorab gesetzten Verankerungsloch 2 verspannt und derart befestigt werden kann. Das Vorgehen zum Setzen der Bohrungen ist folgendermaßen : Zunächst wird in herkömmlicher Weise mit einer Bohrmaschine ein senkrecht zur Oberfläche der Betonwand 1 verlaufendes Verankerungsloch 2 gesetzt. Anschließend wird die Platte 41 mittels der Schrauben und der Spannhülse auf der Betonwand 1 festgelegt und danach mittels der Bohrmaschine 34 und deren Bohrers 33 das Hilfsbohrloch mit der Achse 26 gesetzt, wobei der Bohrer 33 durch den Durchbruch 32 der Platte 41 geführt wird. Trifft der Bohrer dabei auf eine Armierung, so kann die Schraube 43 leicht gelöst werden und die Platte 41 um die Schraube 43 bzw. die Achse 27 des Verankerungslochs 2 verdreht werden und ein weiterer Bohrvorgang für ein Hilfsbohrloch mittels des Bohrers 33 versucht werden. Hierdurch kann ohne größeren Aufwand vermieden werden, daß Armierungen beim Bohren des Hilfsbohrloches getroffen werden.

## Patentansprüche

1. Verfahren zum Verankern von Verankerungsstangen od. dgl. für schwere lasten, insbesondere in Beton, wie Betondecken, wobei ein der Aufnahme der Verankerungsstange (11, 11') dienendes Verankerungsloch (2) und mindestens ein das Verankerungsloch schneidendes Hilfsbohrloch (3) gesetzt werden und ein Verankerungselement (4) derart eingesetzt wird, daß es entgegen einer Zugbeanspruchung in dem Verankerungsloch mittels der Seitenwände des Hilfsbohrlochs (3) gehalten wird, dadurch gekennzeichnet, daß das Hilfsbohrloch (3) unter einem spitzen Winkel α zum Verankerungsloch (2) gesetzt wird.

2. Verfahren nach Anspruch 1, dadurch gekennzeichnet, daß beide Löcher (2, 3) von der gleichen Seite des Betons (1) her ausgeführt werden.

3. Verfahren nach Anspruch 1 oder 2, dadurch gekennzeichnet, daß das Hilfsbohrloch (3) unter einem spitzen Winkel von mehr als 45° zum Verankerungsloch (2) gesetzt wird.

4. Verfahren nach einem der vorangehenden Ansprüche, dadurch gekennzeichnet, daß zunächst das Verankerungsloch (2) und anschließend das Hilfsbohrloch (3) gesetzt wird.

5. Verfahren nach Anspruch 4, dadurch gekennzeichnet, daß nach Vornahme des Verankerungslochs (2) zum Setzen des Hilfsbohrlochs (3) mittels des Verankerungslochs (2) ein Hilfselement (41) auf der Wand des Betons (1) befestigt wird, das ein vorgegebenenes Führungsloch (32) zum Setzen des Hilfsbohrlochs (3) aufweist und das Hilfsbohrloch (3) mittels dieses Hilfselements (41) gesetzt wird.

6. Verfahren nach einem der Ansprüche 1 bis 4, dadurch gekennzeichnet, daß beide Löcher (2, 3) mittels eines Hilfselements (31) mit Führungslöchern (32, 42) und darauf befestigten Bohrmaschinen (34, 40) gesetzt werden.

7. Verfahren nach einem der vorangehenden Ansprüche, dadurch gekennzeichnet, daß ein an sich bekannter Dübel mit schwenkbaren Haltearmen, wie ein Kipp- oder Spreizdürbel, vorzugsweise aus Metall, soweit in das Verankerungsloch (2) eingeschoben wird, bis die Halterungsarme in das Hilfsbohrloch (3) eingreifen.

8. Verfahren nach einem der Ansprüche 1 bis 6, dadurch gekennzeichnet, daß als Verankerungse

lement (4) ein im wesentlichen zylindrisches Element (4) mit einem sich unter dem Schnittwinkel von Verankerungsloch (2) und Hilfsbohrloch (3) zur Längsachse des Elements (4) erstreckendem Querdurchbruch mit Innengewinde (6) in das Hilfsbohrloch (3) soweit eingeführt wird, daß das Innengewinde (6) im wesentlichen mit dem Verankerungsloch (2) fluchtet und daß anschließend die als Gewindestange (11) ausgebildete Verankerungsstange eingeschraubt wird.

9. Verfahren nach Anspruch 8, dadurch gekennzeichnet, daß das Verankerungselement (4) während des Einschraubens der Gewindestange (11) mittels eines Halters (7) von außerhalb der Hilfsbohrung gehalten wird.

10. Verfahren nach Anspruch 8 oder 9, dadurch gekennzeichnet, daß nach Einschrauben der Gewindestange (11) diese von der Hilfsbohrung aus in dem zylindrischen Element (4) fixiert wird.

11. Verfahren nach Anspruch 10, dadurch gekennzeichnet, daß die Gewindestange (11) im zylindrischen Element (4) festgeklebt wird.

12. Verfahren nach Anspruch 10, dadurch gekennzeichnet, daß das Gewinde der Gewindestange (11) durch einen von der einen Stirnseite (8) des im wesentlichen zylindrischen Elements (4) bis zum Querdurchbruch mit Innengewinde (6) sich erstreckenden Axialdurchbruch (9) des zylindrischen Elements (4) hindurch mit einer Körnung versehend wird.

13. Verfahren nach Anspruch 10, dadurch gekennzeichnet, daß die Gewindestange (11) mittels einer durch einen von der einen Stirnseite (8) des im wesentlichen zylindrischen Elements (4) bis zum Querdurchbruch mit Innengewinde (6) sich erstreckenden, mit einem Gewinde versehenen Axialdruchbruch (9) eingeschraubten Fixierschraube festgelegt wird.

14. Verfahren nach einem der vorangehenden Ansprüche, dadurch gekennzeichnet, daß die Bohrlöcher (2, 3) mittels Diamantbohrern (33, 35) gesetzt werden.

15. Verfahren nach einem der vorangehenden Ansprüche, dadurch gekennzeichnet, daß dem Hilfsbohrloch (3) ein größerer Durchmesser als dem Verankerungsloch (2) gegebenwird.

16. Verfahren nach einem der vorangehenden Ansprüche, dadurch gekennzeichnet, daß auf die Verankerungsstange (11) in dem Bohrloch eine Hülse (21) aufgeschoben wird.

17. Vorrichtung zum Setzen von Bohrlöchern (2, 3) im Beton od. dgl., mit mindestens einer Bohrmaschine, insbesondere nach dem Verfahren nach einem der vorangehenden Ansprüche, mit einem Hilfselement, beispielsweise einer Platte (31, 41) mit mindestens einem Durchbruch (32), dadurch gekennzeichnet, daß der Durchbruch (32) unter einem spitzen Winkel zur Senkrechten zur Auflageseite (36) des Hilfselements (31, 41) verläuft und als geneigte Führungshülse für einen Bohrer (33) ausgebildet ist und daß auf dem Hilfselement (31, 41) zumindest eine Bohrmaschine (40) derart anbringbar ist, daß ihr Bohrer (33) durch den geneigten Durchbruch (32) führbar ist.

18. Vorrichtung nach Anspruch 17, dadurch gekennzeichnet, daß an dem Hilfselement (31) eine zweite Bohrmaschine (34) derart anbringbar ist, daß sie sich senkrecht zur Auflagefläche (36) erstreckt.

19. Vorrichtung nach Anspruch 18, dadurch gekennzeichnet, daß der Bohrer (35) der zweiten Bohrmaschine ebenfalls durch ein Führungsloch (42) des Hilfselements (31) geführt ist.

20. Vorrichtung nach einem der Ansprüche 17 bis 19, dadurch gekennzeichnet, daß die Bohrmaschine (34, 40) mittels einer Befestigungsvorrichtung (37) mit zwei Stützen (38, 39) gehalten wird, wobei die Stützen mit der Bohrmaschine (34, 40) bzw. dem Bohrer (35, 33) fluchten.

21. Vorrichtung nach einem der Ansprüche 17 bis 20, dadurch gekennzeichnet, daß in einem Führungsloch (42) des Hilfselements (41) eine Schraube (43) einsetzbar und in einer Betonwand (1) derart verspannbar ist, daß das Hilfselement (41) um die Schraube (43) verschwenkbar ist.

22. Verankerungselement zum Verankern von Verankerungsstangen (11) od. dgl., in Beton mittels des Verfahrens nach einem der Ansprüche 1 bis 6 und 8 bis 16 mit einem im wesentlichen zylindrischen Element (4) mit einem Querdurchbruch und einem Innengewinde (6) im Querdurchbruch, dadurch gekennzeichnet, daß die Richtung des Querdurchbruchs mit der Längsachse des Elements (4) einen spitzen Winkel $\alpha$ einschließt.

23. Verankerungselement nach Anspruch 22, dadurch gekennzeichnet, daß das im wesentlichen zylindrische Verankerungselement (4) ein Massivteil ist.

24. Verankerungselement nach Anspruch 22, dadurch gekennzeichnet, daß das im wesentlichen zylindrische Verankerungselement (4) eine Verankerungshülse ist.

25. Verankerungselement nach Anspruch 24, dadurch gekennzeichnet, daß in dem Querdurchbruch eine Querhülse mit einem Innengewinde (6) befestigt ist.

26. Verankerungselement nach einem der Ansprüche 22 bis 25, dadurch gekennzeichnet, daß das Element (4) zumindest an einem Stirnende (8) eine Mehrkantausnehmung für ein Hilfswerkzeug (7) aufweist.

27. Verankerungselement nach einem der Ansprüche 22 bis 25, dadurch gekennzeichnet, daß das Element (4) einen Mehrkantansatz zum Angreifen eines Hilfswerkzeugs (7) aufweist.

28. Verankerungselement nach Anspruch 26 oder 27, dadurch gekennzeichnet, daß die Mehrkantausnehmung bzw. der Mehrkantansatz asymmetrisch sind.

29. Verankerungselement nach Anspruch 28, dadurch gekennzeichnet, daß die Mehrkantausnehmung bzw. der Mehrkantansatz derart ausgestaltet ist, daß ein mit entsprechendem Mehrkantansatz bzw. entsprechender Ausnehmung versehenes Hilfswerkzeug (7) nur in einer bestimmten Winkelstellung ansetzbar ist.

30. Verankerungselement nach einem der Ansprüche 22 bis 25, dadurch gekennzeichnet, daß das Element (4) zumindest an einem Stirnende (8) ein Schraubgewinde (9) zum Eingriff mit einem Schraubgewinde (10) eines Hilfswerkzeugs (7) aufweist.

31. Verankerungselement nach Anspruch 30, dadurch gekennzeichnet, daß das Schraubgewinde (9) eine exakt vorgegebene Gangzahl aufweist mit in Bezug auf die dem Stirnende (8) näher gelegene Öffnung des Querdurchbruchs definiertem Gewindebeginn.

32. Verankerungselement nach einem der Ansprüche 22 bis 30, dadurch gekennzeichnet, daß der Querdurchbruch zumindest in einer Mantelfläche des als Hülse ausgebildeten Elements (4) eine zentrierende Erweiterung (13) aufweist.

## Claims

1. Method for fixing an anchoring bar or the like for heavy loads, particularly in concrete structures such as concrete ceilings, in providing an anchoring hole (2) as seat for the anchoring bar (11, 11') and at least one additional hole (3) intersecting the anchoring hole in said structure, an in placing an anchoring element (4) in the additional hole so that the anchoring element is able to take up a pulling force acting along the anchoring hole, said anchoring element being supported by means of the side walls of the additional hole (3), characterised in that the additional hole (3) is set with an acute angle α to the anchoring hole (2).

2. Method according to claim 1, characterised in that both holes (2, 3) are set from the same side of the concrete structure (1).

3. Method according to claim 1 or 2, characterised in that the additional hole (3) is set with an acute angle of more than 45° to the anchoring hole (2).

4. Method according to one of claims 1 to 3, characterised in that the anchoring hole (2) is set first and subsequently the additional hole (3).

5. Method according to claim 4, characterised in that in order to provide the additional hole (3) by aid of the anchoring hole (2) after setting the anchoring hole (2) an auxiliary element (41) is fixed to the concrete structure (1), said auxiliary element having a guide opening (32) for setting the additional hole (3) and the additional hole (2) then being set by means of the auxiliary element (41).

6. Method according to one of claims 1 to 4, characterised in that both holes (2, 3) are set by means of a template (31) having guide openings (32, 42) and drilling machines fixed thereon.

7. Method according to one of claims 1 to 6, characterised in that a dowel known per se with swinging arms, such as a tilting or straddling dowel, preferably made of metal, is inserted into the anchoring hole (2) until the swinging arms engage the additional hole (3).

8. Method according to one of claim 1 to 6, characterised in that the anchoring element (4) is essentially a cylindrical element (4) with a opening there through having an angle to the axis of the anchoring element (4) equal to the angle between the anchoring hole (2) and the additional hole (3), said opening of said anchoring element having an inside thread (6) being inserted into the additional hole (3) until the inside thread (6) is generally aligned with the anchoring hole (2) and that subsequently the anchoring bar being formed as threaded bar (11) is screwed into said ope ning.

9. Method according to claim 8, characterised in that the anchoring element (4), is positioned by means of a holder (7) extending out of the additional hole, while the threaded bar (11) is screwed in.

10. Method according to claim 8 or 9, characterised in that after screwing in the threaded bar (11), it is fixed in the cylindrical element (4), through additional hole.

11. Method according to claim 10, characterised in that the threaded bar (11) is glued into the cylindrical element (4).

12. Method according to claim 10, characterised in that the thread of the threaded bar (11) is provided with with a punching mark, through an axial opening (9) extending from one end face (8) to the diagonal opening with the inside thread (6) of the cylindrical element (4).

13. Method according to claim 10, characterised in that the threaded bar (11) is locked by a setscrew, being screwed into an axial opening (9) of the cylindrical element (4) having an inside thread extending from one end face (8) to the diagonal opening.

14. Method according to one of claims 1 to 13, characterised in that the holes (2, 3) are set by diamond drills (33, 35).

15. Method according to one of claims 1 to 14, characterised in that the additional hole (3) is provided with a greater diameter than the anchoring hole (2).

16. Method according to one of claims 1 to 15, characterised in that a sleeve (21) is put on the anchoring bar (11) inside the hole.

17. Device for setting holes (2, 3) in concrete structures or the like, by means of at least one drilling machine, particularly by the method according to one of the previous claims, having an auxiliary element, for example a template (31, 41) with at least one opening (32), characterised in that the opening (32) has an acute angle to a normal line of the support face (36) of the auxiliary element (31, 41), said opening being formed as a sloped guide sleeve for a drill (33), said auxiliary element (31, 41) being designed to support at least one drilling machine (40) so that its drill (33) is guided by the sloped opening (32).

18. Device according to claim 17, characterised in that a second drilling machine (34) can be fixed on the auxiliary element (31), extending normal to the support face (36).

19. Device according to claim 18, characterised in that the drill (35) of the second drilling machine is also guided through a guide opening (42) of the auxiliary element (31).

20. Device according to one of claims 17 to 19, characterised in that the drilling machine (34, 40) is fixed by means a fixing device (37) having two supports (38, 39), said supports being parallel to the drilling machine (34, 40) resp. the drill (33, 35).

21. Device according to one of claim 17 to 20, characterised in that a screw (43) can be inserted in a guiding hole (42) of the auxiliary element (41) and can be braced inside the concrete wall (1), in that manner that the auxiliary element (41) is turnable around the screw (43).

22. Anchoring element for fixing anchoring bar (11) or the like, in concrete structures by means of the method according to one of claims 1 to 6 and 8 to 16 having an essentially cylindrical element (4) with a diagonal opening and an inside thread (6) inside the diagonal opening, characterised in that the axis of the diagonal opening having an acute angle $\alpha$ to the axis of the element (4).

23. Anchoring element according to claim 22, characterised in that the essentially cylindrical anchoring element (4) is a solid element.

24. Anchoring element according to claim 22, characterised in that the essentially cylindrical anchoring element (4) is an anchoring sleeve.

25. Anchoring element according to claim 24, characterised in that a diagonal sleeve with an inside thread (6) is anchored in the diagonal opening.

26. Anchoring element according to one of claims 22 to 25, characterised in that the element (4) has at least in one end face (8) a polygonal recess for an auxiliary tool (7).

27. Anchoring element according to one of claims 22 to 25, characterised in that the element (4) has a polygonal stud for engaging an auxiliary tool.

28. Anchoring element according to claim 26 or 27, characterised in that the polygonal recess resp. the polygonal stud are formed asymmetrically.

29. Anchoring element according to claim 28, characterised in that the polygonal recess resp. the polygonal stud have such a form that an auxiliary tool (7) with a corresponding polygonal stud resp. a corresponding recess fits only in a definite angle position.

30. Anchoring element according to one of claim 22 to 25, characterised in that the element (4) has at least at one end face (8) a screw thread (9) for engaging a respective screw thread (10) of an auxiliary tool (7).

31. Anchoring element according to claim 30, characterised in that the screw thread (9) has an exact given number of starts having a defined angle position of the beginning of the thread regard to the end of the diagonal opening being next to the end face (8).

32. Anchoring element according to one of claims 22 to 30, characterised in that the diagonal opening has a centering enlargement (13) for the anchoring bar (11) at least at one surface of the element (4) being formed as a sleeve.

**Revendications**

1. Procédure d'ancrage de barres d'ancrage ou éléments similaires pour charges lourdes, plus particulièrement dans le béton comme par exemple dans les planchers en béton ; un des trous d'ancrage servant à loger la barre d'ancrage (11, 11') et au moins une forure auxiliaire (3) coupant le trou d'ancrage équipent la barre ; un élément d'ancrage (4) est appliqué de telle sorte qu'il résiste à un effort de traction dans le trou d'ancrage à travers les parois latérales de la forure auxiliaire. Caractéristique : la forure auxiliaire (3) forme un angle aigu $\alpha$ avec le trou d'ancrage (2).

2. Procédure selon la spécification 1 ; elle est caractérisée par le fait que les deux trous (2, 3) sont forés à partir du même côté du béton (1).

3. Procédure selon la spécification 1 ou 2 ; elle est caractérisée par le fait que la forure auxiliaire (3) forme un angle aigu de plus de 45° avec le trou d'ancrage.

4. Procédure selon l'une des spécifications ci-dessus ; elle est caractérisée par le fait que l'on perce d'abord le trou d'ancrage (2) et ensuite la forure auxiliaire (3).

5. Procédure selon la spécification 4 ; elle est caractérisée par le fait qu'on fixe sur la paroi du béton, après le perçage du trou d'ancrage (2) un élément auxiliaire (41) pour percer la forure auxiliaire à travers le trou d'ancrage ; il existe un trou de guidage prédéterminé (32) pour le perçage de la forure auxiliaire (3) à travers l'élément auxiliaire (41).

6. Procédure selon l'une des spécifications 1 à 4 ; elle est caractérisée par le fait que les deux trous (2, 3) sont percés à travers l'élément auxiliaire (31) pourvu de trous de guidage (32, 42) et portant les foreuses (34, 40).

7. Procédure selon l'une des spécifications ci-dessus ; elle est caractérisée par le fait qu'une cheville pourvue de bras de support oscillants comme une cheville à bascule ou entretoise, de préférence en métal, est introduite dans le trou d'ancrage (2) jusqu'à ce que les bras de fixation pénètrent dans la forure auxiliaire (3).

8. Procédure selon l'une des spécifications 1 à 6 ; elle est caractérisée par le fait qu'en tant qu'élément d'ancrage (4), un élément essentiellement cylindrique (4) avec un percement transversal partant sous l'angle de biseau du trou d'ancrage (2) et de la forure (3) et se prolongeant jusqu'à l'axe longitudinal de l'élément (4) et pourvu d'un taraudage (6) est introduit dans la forure auxiliaire (3) jusqu'à ce que le taraudage s'aligne pour l'essentiel sur le trou d'ancrage (2) et que par la suite, la barre d'ancrage pareille à une barre filetée soit vissée.

9. Procédure selon la spécification 8 ; elle est caractérisée par le fait qu'au cours de l'opération de vissage de la barre filetée (11), l'élément d'ancrage (4) est maintenu par un manche (7) depuis l'extérieur de la forure auxiliaire.

10. Procédure selon la spécification 8 ou 9 ; elle est caractérisée par le fait qu'après le vissage de la barre filetée, cette dernière est fixée dans l'élément cylindrique (4) depuis la forure auxiliaire.

11. Procédure selon la spécification 10 ; elle est caractérisée par le fait que la barre filetée (11) adhère dans l'élément cylindrique (11).

12. Procédure selon la spécification 10 ; elle est caractérisée par le fait que le filet de la barre filetée (11) est pourvu d'un calibrage s'étendant sur un percement axial (9) de l'élément cylindrique (4) allant depuis l'un des fronts de l'élément cylindrique (4) jusqu'au percement transversal avec taraudage (6).

13. Procédure selon la spécification 10 ; elle est caractérisée par le fait que la barre filetée (11) est fixée au moyen d'une vis de fixation passant par un percement axial (9) pourvu d'un filet, et allant de l'un des fronts (8) de l'élément cylindrique (4) jusqu'au percement transversal avec taraudage (6).

14. Procédure selon l'une des spécifications ci-dessus ; elle est caractérisée par le fait que les forures (2, 3) sont exécutées au moyen de foret diamanté (33, 35).

15. Procédure selon l'une des spécifications ci-dessus ; elle est caractérisée par le fait que le diamètre de la forure auxiliaire est supérieur à celui du trou d'ancrage.

16. Procédure selon l'une des spécifications ci-dessus ; elle est caractérisée par le fait qu'un manchon est glissé dans la forure sur la barre d'ancrage (11).

17. Montage pour l'exécution de forures (2, 3) dans le béton ou matériaux similaires avec au moins une foreuse, particulièrement selon la procédure d'une des spécifications ci-dessus, avec un élément auxiliaire, une plaque (31, 41) par exemple avec un minimum d'un percement (32) ; caractéristique : le percement (32) se fait à angle aigu par rapport à la verticale du support (36) de l'élément auxiliaire (31, 41) ; formé comme manchon de guidage incliné pour un foret ; au moins une foreuse peut être installée sur l'élément auxiliaire (31, 41) de telle sorte que son foret (33) peut passer par le percement incliné (32).

18. Montage selon la spécification 17 ; il est caractérisé par le fait qu'une deuxième foreuse (34, 35) peut être installée sur l'élément auxiliaire (31) de telle manière qu'elle se trouve dans un plan vertical par rapport au support (36).

19. Montage selon la spécification 18 ; il est caractérisé par le fait que le foret (35) de la deuxième foreuse passe également par un trou de guidage (42) de l'élément auxiliaire (31).

20. Montage selon l'une des spécifications 17 à 19 ; il est caractérisé par le fait que la foreuse (34, 40) est maintenue par un dispositif de fixation avec 2 supports (38, 39), et que les appuis s'alignent sur la foreuse (34, 40) ou le foret (35, 33).

21. Montage selon l'une des spécifications 17 à 20 ; il est caractérisé par le fait qu'il est possible de placer une vis (43) dans un trou de guidage (42) de l'élément auxiliaire (41) et que dans un mur en béton elle peut être déformée de telle manière que l'élément auxiliaire (41) peut se trouver dans un rapport d'obliquité avec la vis (43).

22. Elément d'ancrage pour l'ancrage de barres d'ancrage (11) ou éléments similaires dans le béton au moyen de la procédure selon l'une des spécifications 1 à 6 et 8 à 16 dans un élément essentiellement cylindrique (4) ayant un percement transversal et un taraudage (6) dans le percement transversal ; il est caractérisé par le fait que la direction du percement transversal détermine un angle aigu α par rapport à l'axe longitudinal de l'élément (4).

23. Elément d'ancrage selon la spécification 22 ; il est caractérisé par le fait que l'élément d'ancrage essentiellement cylindrique (4) est une pièce massive.

24. Elément d'ancrage selon la spécification 22 ; il est caractérisé par le fait que l'élément d'ancrage essentiellement cylindrique (4) est un manchon d'ancrage.

25. Elément d'ancrage selon la spécification 24 ; il est caractérisé par le fait qu'un manchon transversal avec taraudage (6) est placé dans le percement transversal.

26. Elément d'ancrage selon l'une des spécifications 22 à 25 ; il est caractérisé par le fait que l'élément (4) présente au moins à l'un des fronts (8) un évidement polygonal pour un outil auxiliaire (7).

27. Elément d'ancrage selon l'une des spécifications 22 à 25 ; il est caractérisé par le fait que l'élément (4) présente une saillie polygonale permettant de saisir un outil auxiliaire (7).

28. Elément d'ancrage selon la spécification 26 ou 27 ; il est caractérisé par le fait que l'évidement polygonal ou la saillie polygonale sont asymétriques.

29. Elément d'ancrage selon la spécification 28 ; il est caractérisé par le fait que l'évidement polygonal ou la saillie polygonale sont conçus de telle façon qu'un outil auxiliaire pourvu de la saillie polygonale correspondante ou de l'évidement correspondant ne peut être installé que dans une position d'angle spécifique.

30. Elément d'ancrage selon l'une des spécifications 22 à 25 ; il est caractérisé par le fait que l'élément (4) présente à au moins un front (8) un filetage de vis (9) permettant de saisir un outil auxiliaire (7).

31. Elément d'ancrage selon la spécification 30 ; il est caractérisé par le fait que le filetage de vis (9) présente un nombre de spires prédéterminé de manière exacte avec un début de filet défini par référence avec l'ouverture du percement transversal située le plus près du front (8).

32. Elément d'ancrage selon l'une des spécifications 22 à 30 ; il est caractérisé par le fait que le percement transversal présente un élargissement de centrage sur au moins une surface latérale de l'élément (4) formé comme un manchon.

FIG.1a  FIG.1b  FIG.1c

FIG.1d  FIG.1e  FIG.1f

FIG.2

FIG.3

FIG.4

FIG.5

0 062 155

FIG.6

FIG.7A          VIIB

FIG.8A          VIII B

FIG.7B          FIG.8B

3

FIG.9

FIG.10